# EUROPEAN PATENT SPECIFICATION

(11) **EP 3 934 412 B1**
(45) Date of publication and mention of the grant of the patent: **05.10.2022**
(21) Application number: 21728632.7
(22) Date of filing: 18.05.2021
(51) Int. Cl.: A01G 27/06, A01C 1/04, A01G 24/44, A01C 1/02

(54) **GROWING DEVICE, SEED PAD AND GROWING SYSTEM FOR GROWING PLANTS FROM SEEDS**
ZÜCHTUNGSVORRICHTUNG, SAMENPAD UND ZÜCHTUNGSSYSTEM ZUM ZÜCHTEN VON PFLANZEN AUS SAMEN
DISPOSITIF DE CULTURE, TAPIS DE SEMENCES ET SYSTÈME DE CULTURE POUR LA CULTURE DE PLANTES À PARTIR DE SEMENCES

(30) Priority: 22.10.2020 US 202017077171
(43) Date of publication of application: 12.01.2022
(73) Proprietor: ingarden Inc., Dover, DE 19901 (US)
(72) Inventor: SCHUMACHER, Harm-Julian, 20354 Hamburg (DE); GOGA, Christian, 10439 Berlin (DE); HAAKE, Anthony Elias, 50259 Pulheim (DE); BECK, Norbert, 22529 Hamburg (DE)
(74) Representative: Bardehle Pagenberg Partnerschaft mbB Patentanwälte Rechtsanwälte
(86) International application number: PCT/IB2021/054251
(87) International publication number: WO 2021/220256

(56) References cited:
- EP-A1- 3 586 581
- FR-A1- 3 042 944
- GB-A- 2 499 225
- KR-A- 20140 131 611
- US-A- 6 079 156

## Description

### 1. Technical field

The present invention relates to a growing device and system for growing plants from seeds as well as to seed pads that can be used together with such growing devices and systems.

### 2. Technical Background

Growing edible and / or medical plants at home is a healthy, low cost and resource efficient alternative to industrial farming. In this context,

US 4,407,092 relates to a hydroponic assembly in the form of a tray having spaced through-openings serving as growing stations. The tray is supported by a trough containing a body of nutrient solution. At each growing station there is a wafer of dry compressed growing medium having a seed-receiving surface on its top side and having a wick communicating with its underside and extending downwardly into the nutrient solution. The growing medium expands into a porous root-supporting block as the solution is fed via the wick by capillary action. The wick is preferably secured to the underside of the wafer by being tacked in place with a metal staple.

Further, KR 2012/0094184 relates to a plant cultivation chamber supplying culture fluid in a simple manner. A cultivation container unit can be detached from a cultivation chamber unit by sliding a guiding member. The chamber unit includes guide rail units located on both side walls on the cultivation chamber unit, and a sensor unit on the predetermined position on an inner wall of the cultivation chamber unit. Further, US 2017/0172082 relates to a hydroponic system that can include a pad medium that includes a plurality of seeds. The pad medium can be supported over a water vessel by a support medium. The system can also include a first nutrient strip that can be coupled to the pad medium, support medium, or vessel. The nutrient strip can include a first nutrient pad that is impregnated with nutrients. The nutrient strip can also include a barrier layer that at least partially encloses the nutrient pad. The barrier layer can include an opening to expose the nutrient pad to an external environment. A shape of the nutrient pad and a shape of the opening can be configured to control a rate of release of nutrients from the nutrient strip.

Moreover, US 2018/0317400 relates to a device for cultivating plants, comprising a watering device, an illuminating device, one or more seed mats, and a control unit configured to control the watering device and the illuminating device by means of a program controller, wherein the program controller comprises watering data and illuminating data which is individually matched to the one or more seed mats.

In addition, DE 2020/17100245 relates to a seed pad comprising a mat and seeds, characterized in that the mat comprises a wick for immersion in a liquid reservoir such that a liquid is deposited by means of capillary forces through the wick into the mat conveyable and distributed in the mat. The seeds are attachable to the mat with a first adhesive, having a variable composition matched to certain characteristics of the seeds.

Furthermore, KR 2014 0131611 A relates to a plant cultivation device comprising a lower water case in which a sufficient amount of water is stored, a cultivation container support plate fitted into the lower water case or covering the lower water case, a plant cultivation container fitted into the cultivation container support plate, a moisture absorber fitted into the cultivation container and having a molding structure of raising the moisture in the water case into the cultivation container and a seed germination plate put on the moisture absorber with the molding structure and supplying the moisture to plants, wherein the plants take root in the seed germination plate.

In addition, FR 3 042 944 A1 is directed to a cultivation system, which comprises a tank containing water and accommodating containers, and a pole supporting light sources. Further, an element is intended to be placed in each container. It comprises at least one seed of a plant, a substrate suitable for allowing said plant to grow, and a fertilizer. Furthermore, the element is in the form of a substantially solid compacted body. The element is manufactured in a mold by compressing its various components.

The prior art devices, systems and seed pads / seed mats have various deficiencies.

For instance, water supply to the individual seeds being grown may not be optimal. In some of the prior art systems, not all seeds within a given seed pad or growing container are supplied the same amount of water. In addition, water supply may not be optimal throughout the growth cycle of the plants being grown. As a result, some or all of the seeds and / or plants grown by the prior art systems and devices may not always receive enough water for obtaining optimal yields. On the other hand, in some of the prior art devices and systems some or all the seeds may be supplied with too much water. As a result, parasites (e.g. mold) may degrade the obtainable yields. In other words, prior art water supply solutions do not provide optimal moisture conditions for plant growth. Similarly, for at least some of the prior art systems and devices illumination and / or nutrient supply may also be sub-optimal. As a consequence, plant yields are lower than what could be achievable in optimal growing conditions.

In addition, some of the prior art systems, devices and / or seed pads, and in particular the water supply components or assemblies known from the prior art may be bulky and / or costly to manufacture.

It is thus a problem underlying the present invention to overcome such and similar deficiencies of prior art technologies.

### 3. Summary of the invention

The above-mentioned problems are at least partially solved by the growing device of independent claim 1, the seed pad of independent claim 8 and the growing system of independent claim 15.

Some specific embodiments are specified in the dependent claims.

Specifically, the present invention provides a growing device for growing plants from seeds, comprising a water container, a seed pad support structure for receiving one or more seed pads in a predetermined growing position above the water container; and a wicking structure for each seed pad configured to contact, when the corresponding seed pad is in the growing position, the bottom surface of the seed pad at a predetermined wicking interface area and configured to transport water from the water container into the seed pad through the wicking interface area via capillary action; and wherein the seed pad support structure comprises a protrusion for each seed pad, the protrusion having a predetermined shape and orientation and being configured to interact with a correspondingly shaped perforation in the corresponding seed pad thereby defining the predetermined growing position.

Further, the present invention provides a corresponding seed pad for a growing device for growing plants from seeds, comprising a seed pad base comprising a wicking material, wherein the seed pad base is configured to receive a plurality of plant seeds arranged in or on a top surface of the seed pad base, wherein the seed pad base has at least one perforation having a predetermined shape and orientation configured to interact with a correspondingly shaped protrusion of the growing device, thereby defining a predetermined growing position for the seed pad when the seed pad is inserted into the growing device. The seed pad further comprises a wicking interface area on the bottom surface of the seed pad base configured to contact a corresponding wicking structure of the growing device, when the seed pad is in the growing position to establish capillary water transport from the growing device to the seed pad, wherein the wicking material transports water from the wicking interface area to the plant seeds via capillary action.

Combined the provided growing device and one or more or the provided seed pads form a growing system for growing plants from seeds with superior moisture supply for the seeds and plants being grown.

Specifically, the present invention facilitates an essentially homogenous moisture supply to all seeds and plants of the seed pad throughout the grows cycle of the plants being grown. As a result, plant yields are optimized while simultaneously minimizing water usage, maintenance requirements for the growing system and / or material waste when manufacturing of the seed pads.

Further, in some embodiments, the predetermined shape of the protrusion may not be rotationally symmetric and the area of the cross section of the protrusion may decrease in a direction pointing away from the top surface of the seed pad support structure.

In this manner, even a single protrusion may be sufficient to fully define the predetermined growing position for the seed pad.

According to the invention, the protrusion extends through the corresponding perforation in the seed pad, when in the growing position, and may comprise a top opening and a bottom opening thereby forming a vent from the space below the seed pad to the space above the seed pad.

In this manner, the vent of the seed pad support structure and the perforation of the seed pad interact to implement a gas exchange mechanism from the space below the seed pad to the space above the seed pad improving proper functioning of the wicking structure even when the plants being grown have (almost) attained harvesting conditions.

For instance, a portion of the wicking structure for each seed pad may extend underneath or through the corresponding vent formed by the corresponding protrusion, such that an air flow through the vent increases the evaporation rate of the portion of the wicking structure.

This increase in the evaporation rate of the wicking structure allows to decouple the capillary water transport in the wicking structure at least partially from the evaporation rate of the seed pad and / or the plant leaves of the plants being grown. In this manner, the water supply to the seeds / plants being grown can be increased and kept more homogenous throughout the complete growths cycle of the plants being grown.

In some embodiments, each wicking structure may comprise a wick dipping into the water container with both ends, and, when in the growing position, contacting the wicking interface area of the bottom surface of the corresponding seed pad with an interface portion of the wick arranged in between both ends of the wick.

By incorporating a wick into the seed pad support structure, the wick can be hold in place and be reused with many seed pads in the future, thereby reducing waste and simplifying seed pad usage and manufacturing.

For instance, the length of the wick may be larger than 170 mm and smaller than 230 mm and the diameter of the wick may be larger than 4 mm and smaller than 6 mm.

Further, the seed pad support structure may comprise a removable wick holder for each wick, each wick holder comprising the protrusion, wherein the protrusion extends through the perforation in the corresponding seed pad, when in the growing position, and comprises a top opening and a bottom opening thereby forming a vent from the space below the seed pad to the space above the seed pad.

Such a removable wick holder simplifies the manufacturing of the seed pad support structure and facilitates an easy and fast wick exchange.

Further, the vent formed by the protrusion of the wick holder may comprise two lateral openings such that the wick can extend through the vent and the wick may comprise two interface portions extending along the top surface of the wick holder at opposite sides of the vent. In addition, the protrusion may be arranged in the center of the top surface of the wick holder.

This symmetric construction of the wick holder ensures that the positive technical effect of the vent (e.g. enhanced performance of the wick) can be combined with supplying moisture to all seeds of the seed pad in the growing position as homogenously as possible.

For enhanced usability (e.g. during harvest or for exchanging the seed pads) the seed pad support structure may further comprise a removable tray for each seed pad configured to be arranged in between a top surface of the seed pad support structure and a bottom surface of the corresponding seed pad. Each tray may comprise a cutout for the corresponding wicking structure and the corresponding protrusion of the seed pad support structure as well as a plurality of holes for removing excess moisture and improved ventilation of the seed pad.

Moreover, the growing device may also comprise a light source arranged above the seed pads in the growing position for providing the growing plants with energy for photosynthesis and wherein the light source provides more than 210 mole and less than 250 mole of photosynthetic active radiation per day.

For instance, the light source may be configured to operate 12h / day with a color rendering index of larger than 90, preferably larger than 95 and an effective temperature of less or equal than 4000 Kelvin corresponding to more of 90% of the emitted photons being photosynthetic active radiation.

In some embodiments, the growing device may further comprise an electronic label reader operably connected to the light source configured to determine illumination parameters, such as light intensity, illumination duration, color composition, etc. from a machine-readable label of the one or more seed pads.

In this way the illumination may be adjusted to the seeds and plants being grown and / or to the evaporation and moisture transport characteristics of the seed pad material. Further, the seed pad may comprise a rectangular or quadratic footprint and / or rounded corners.

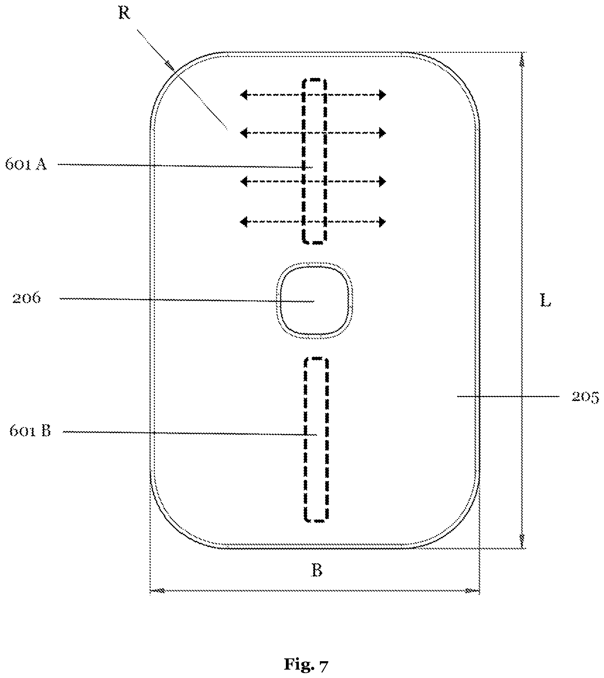

More specifically, the length of the seed pad maybe larger than 115 mm and smaller than 121 mm, preferably 118 mm, and the width of the seed pad may be larger than 75 mm and smaller than 81 mm, preferably 76 mm. In addition, the seed pad may comprise an elongated wicking interface area along the center line in each half of the seed pad (see Fig. 7 below).

Additionally, length of each elongated wicking interface area may be larger than 25 mm and smaller than 31 mm, preferably 28 mm.

Experiments and simulations performed by the inventors have revealed that the combination of these dimensions facilitate homogenous water supply to essentially all seeds of the seed pad. As a result, the whole seed pad stays moist throughout the complete growth cycle of the plants being grown without leading to mold formation in a broad range of environmental parameters such as air humidity and ambient temperature.

To optimize plant yields per seed pad area even further, the seed pad may comprises only a single perforation in the center of the seed pad, that is not rotationally symmetric and / or that has an area larger than 300 mm² and smaller than 400 mm².

In addition, the perforation in the seed pad may interact with the corresponding protrusion of the growing device to determine a predetermined contact pressure between the wicking interface area of the seed pad and the wicking structure of the growing device.

In some embodiments, the seed pad may further comprise a biodegradable, hydroponic substrate, an essentially regular arrangement of seeds having an area density of 45.000 or more seed per square meter and less than 55.000 seeds per square meter and / or a cellulose layer.

The growing devices specified above can thus be combined with the seed pads specified above to form a growing system for growing plants from seeds, comprising a water container, one or more seed pads comprising a protrusion in the seed pad having a predetermined shape and orientation, a seed pad support structure for receiving the one or more seed pads in a predetermined growing position above the water container, and a wicking structure for each seed pad configured to contact, when the corresponding seed pad is in the growing position, the bottom surface of the seed pad at a predetermined wicking interface area and configured to transport water from the water container into the seed pad through the wicking interface area via capillary action, and wherein the seed pad support structure comprises a protrusion for each seed pad, the protrusion having a predetermined shape and orientation and being configured to interact with the correspondingly shaped perforation in the corresponding seed pad thereby defining the predetermined growing position.

In essence, the present invention thus provides a simple, robust and economic growing system for growing edible or medical plants at home which at the same time ensures optimizes growing conditions throughout the growth cycle of the plants being grown. Thereby high yields and an optimal nutrient content of the grown plants can be achieved.

### 4. Short Description of the Figures

Various aspects of the present invention are described in more detail in the following by reference to the accompanying figures. These figures show:
- **Fig. 1**: a technical drawing illustrating a growing device according to an embodiment of the present invention;
- **Fig. 2**: an explosion view of the seed pad support structure of the growing device of **Fig. 1** together with the corresponding seed pads;
- **Fig. 3**: a technical drawing of one of the removable wick holders of the seed pad support structure of Fig. 2;
- **Fig. 4**: a longitudinal cross section of the wick holder of Fig. 3;
- **Fig. 5**: a longitudinal cross section of the wick holder of Fig. 3 and 4 together with the wick and seed pad in the growing position;
- **Fig. 6**: an illustration of a seed pad according to an embodiment of the present invention;
- **Fig. 7**: a technical drawing from the bottom perspective of the seed pad of Fig. 6 illustrating the wicking interface areas and capillary water transport within the seed pad.

### 5. Detailed Description of some exemplary embodiments

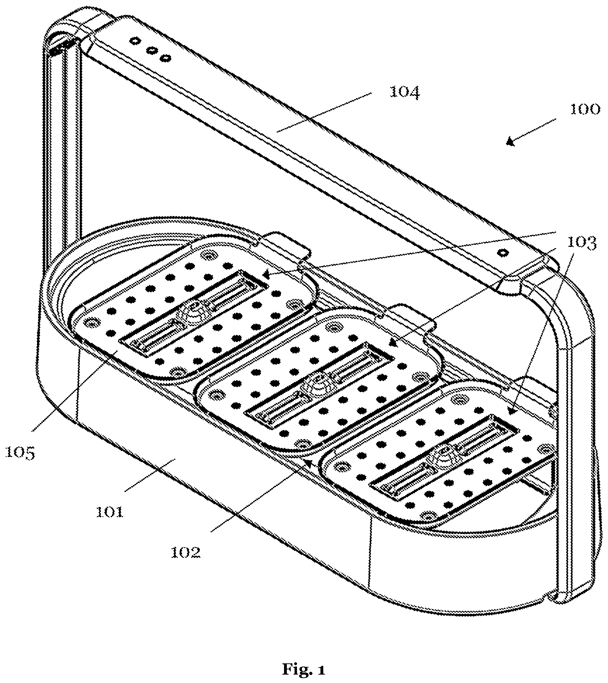

In the following, some exemplary embodiments of the present invention are described in more detail, with reference to a specific design of a growing device and a specific seed pad geometry and function illustrated by the drawings Fig. 1 to Fig. 7.

While specific feature combinations are described in the following with respect to the exemplary embodiments of the present invention, it is to be understood that not all features of the discussed embodiments have to be present for realizing the invention, which is defined by the subject matter of the claims. The disclosed embodiments may be modified by combining certain features of one embodiment with one or more features of another embodiment. Specifically, the skilled person will understand that features, components and / or functional elements of one embodiment can be combined with technically compatible features, components and / or functional elements of any other embodiment of the present invention given that the resulting combination is technically sensible.

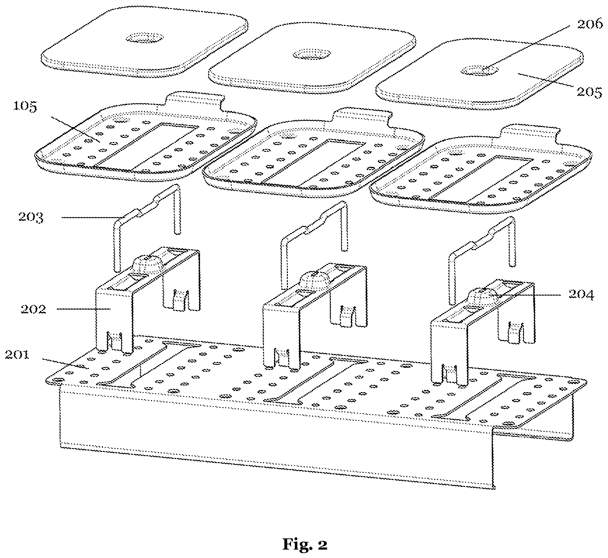

Figure 1 depicts a growing device 100 according to an embodiment of the present invention. The growing device 100 comprises a base 101 forming a water container. The growing device 100 further comprises a seed pad support structure 102 (for details see Fig. 2 below) that can be inserted into the water container and is configured to support one or more seed pads (e.g. three seed pads; not shown).

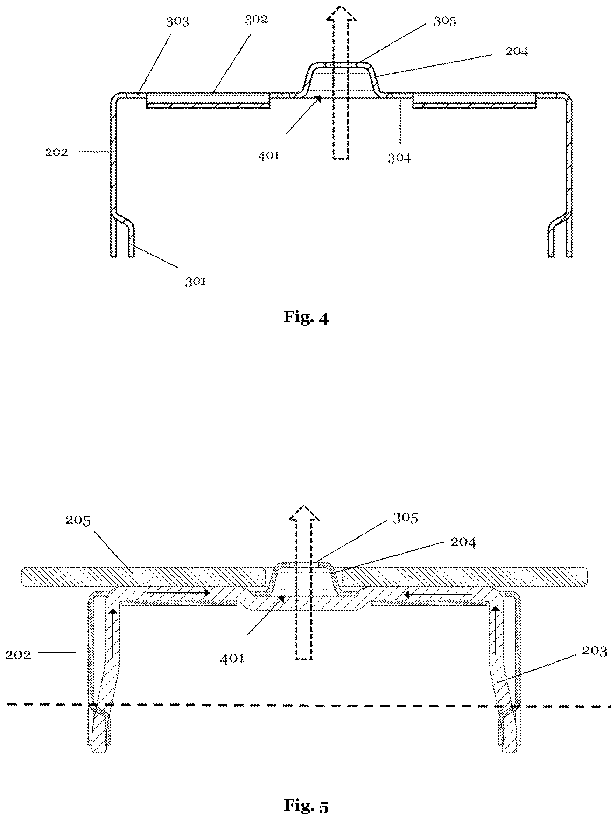

In the illustrated embodiment, the seed pad support structure 102 comprises three removable seed pad trays 105, each comprising an arrangement of ventilation and dripping holes as well as a central cut out for a wicking structure 103 that is configured to supply water to the seed pads via capillary action (see Fig. 5 to Fig. 7 below). In the depicted embodiment, each wicking structure 103 comprises a wick that forms two wicking interfaces to the corresponding seed pad on both sides of a central protrusion defining a growing position for the corresponding seed pad and configured to form a vent from the space below the seed pad (and the top surface of the seed pad support structure 102) to the space above the seed pad.

Moreover, the growing device 100 may also comprise a light source 104 arranged above the seed pads in the growing position for providing the growing plants with energy for photosynthesis. For instance, the light source 104 may provide more than 210 mole and less than 250 mole of photosynthetic active radiation per day. The light source 104 may further be configured to operate 12h / day with a color rendering index of larger than 90, preferably larger than 95 and an effective temperature of less or equal than 4000 Kelvin corresponding to more of 90% of the emitted photons being photosynthetic active radiation.

To reduce the space required by the growing device, the light source 104 may be integrated on the bottom side of a handlebar.

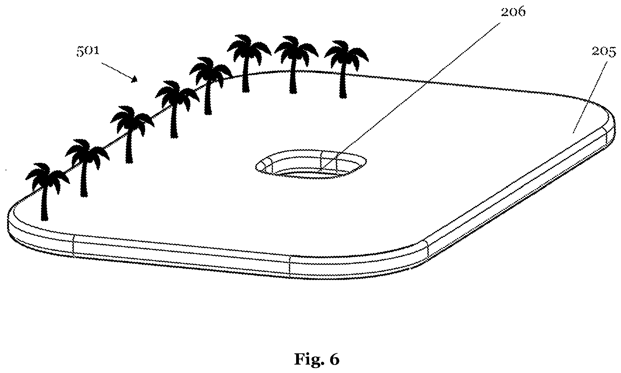

Figure 2 illustrates the seed pad support structure 102 of Fig. 1 together with three seed pads 205. Each seed pad 205 has a rectangular shape with rounded corners as illustrated in more detail in Fig. 6 and Fig. 7 below. In the center of each seed pad 205 a rectangular perforation with rounded corners is arranged. This perforation is configured to interact with the corresponding protrusion 204 formed in the center of the top surface of a removable wick holder 202.

The wick holders 202 can be inserted in corresponding cut outs in the support structure base 201. Each wick holder is configured to hold one wick 203.

Each wick 203 is configured to contact two wicking interface areas (see Fig. 5 and 7 below) arranged on the bottom surface of the corresponding seed pad 205, when the seed pads 205 are inserted into the trays 105 and the perforation 206 conforms to the corresponding perforation 204 of the wick holder 202. Thereby, capillary water transport from the water container (not shown) via the wicks 203 into the seed pads 205 and ultimately to the seeds arranged in or on top of the seed pads is established. The interaction between the perforation 206 and the corresponding protrusion 204 of the wick holder 202 ensures that the wicks 203 contact the bottom surface of the seed pads 205 at a predetermined position and / or with a predetermined contact pressure such that an essentially homogenous moisture level can be maintained within the seed pad 205 throughout the complete growth cycle of the seeds / plants being grown.

The materials used for manufacturing the various components of the growing device 100 and the seed pads 205 may be selected according to various implementation requirements. For instance, the components of the seed pad support structure 102 may be selected from stainless materials such as stainless steel, or anodized aluminum that can easily be cleaned and do not degrade by prolonged exposure to photosynthetic active radiation.

Further, the wicking structure may comprise polymer fibers to prevent mold formation and ensure a long lifetime. Alternatively, the wicking structure may also comprise natural fibers that are biodegradable.

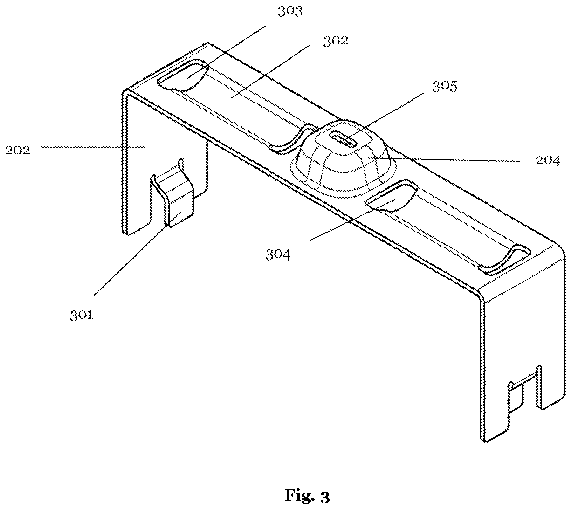

Figure 3, Figure 4 and Figure 5 illustrate one of the wick holders 202 of the seed pad support structure 102 shown in Fig. 1 and Fig. 2 above. The wick holders 202 have the shape of an inverse U with elongated base. At both legs of the wick holders 202 a wick end holder 301 is arranged that ensures that both ends of the wick 203 are properly immersed below the water level in the water container (see the dashed line in Fig. 5).

The wick holder 202 further comprises a central protrusion 204 having a rectangular footprint with rounded corners. The area of the cross section of the protrusion 204 decreases in a direction pointing away from the top surface of the wick holder 202 to facilitate insertion of the corresponding seed pad 205 (see Fig. 5).

An elongated hole 305 is arranged in the center of the top surface of the protrusion 204, that together with a bottom opening 401 of the protrusion (see Fig. 4) forms a vent from the space below the seed pad to the space above the seed pad. The air flow through the vent (indicated by the dashed arrow in Fig. 5 and Fig. 6) increases the evaporation rate of the portion of the wick 205 that extends below the central protrusion 204 (see Fig. 5). The wick holder 202 further comprises lateral openings 303, 304 for inserting the wick 205 such that two interface portions are exposed, and the central portion of the wick runs below the vent formed by the central protrusion 204. The wick holder 202 further comprises two curved support surfaces 302 for the portions of the wick that are configured to contact the wicking interface areas arranged on the bottom surface of the corresponding seed pad 205, when in the growing position that is determined by the interaction of the protrusion 204 and the perforation 206. In Fig. 5 the small arrows indicate the flow direction in the wick 205.

Figure 6 depicts a seed pad 205 according to an embodiment of the present invention. As explained in detail above the seed pad 205 comprises a rectangular footprint and a plurality of seeds arranged in or on the top surface of the seed pad 205. When the seed pad 205 is provided with sufficient moisture (i.e. via the wicking interface as explained above) and sufficient illumination the seeds start growing into a plurality of seedlings 501.

The central protrusion 206 is configured to interact with the corresponding protrusion 204 of the seed pad support structure 102 to define a predetermined growing position for the seed pad 205 and the seeds arranged thereon. In said predetermined growing position growth conditions (e.g. water supply, illumination; etc.) for the seedlings 501 are optimized, e.g. via the wicking interface structure formed by the wick 203 the wick holder 202 and the wicking interface areas arranged on the bottom surface of the seed pad 205.

Figure 7 shows a bottom view of the seed pad 205. The wicking interface areas 601 A, 601 B that are discussed in detail above are indicated with dashed rectangles. The dashed double arrows indicate capillary water / moisture transport from the wicking interface areas 601 throughout the seed pad 205. As explained in section 3**.** above the dimensions of the seed pad B and L as well as the length, width and position of the wicking interface areas 601 are chosen such, that the moisture level throughout the seed pad 205 is maintained as homogenous as possible throughout the entire growth cycle of the plants being grown.

## Claims

1. A growing device (100) for growing plants from seeds, comprising:
a water container (101);
a seed pad support structure (102) for receiving one or more seed pads (205) in a predetermined growing position above the water container (101); and
a wicking structure (103) for each seed pad (205) configured to contact, when the corresponding seed pad (205) is in the growing position, the bottom surface of the seed pad (205) at a predetermined wicking interface area and configured to transport water from the water container (101) into the seed pad (205) through the wicking interface area via capillary action; and
wherein the seed pad support structure (102) comprises a protrusion (204) for each seed pad (205), the protrusion (204) having a predetermined shape and orientation **characterized in** the seed pad support structure being configured to interact with a correspondingly shaped perforation (206) in the corresponding seed pad (205), such that the protrusion (204) extends through the perforation (206) in the corresponding seed pad (205) thereby defining the predetermined growing position for the corresponding seed pad (205).

2. The growing device (100) of claim 1, wherein the predetermined shape of the protrusion (204) is not rotationally symmetric and the area of the cross section of the protrusion (204) is decreasing in a direction pointing away from the top surface of the seed pad support structure (102).

3. The growing device (100) of claim 1 or 2, wherein the protrusion (204) comprises a top opening thereby forming a vent from the space below the seed pad (205) to the space above the seed pad (205).

4. The growing device (100) of claim 3, wherein a portion of the wicking structure (103) for each seed pad (205) extends underneath or through the corresponding vent formed by the corresponding protrusion (204), such that an air flow through the vent increases the evaporation rate of the portion of the wicking structure (103).

5. The growing device (100) of any of the preceding claims 1-4,
wherein each wicking structure (103) comprises a wick dipping into the water container (101) with both ends; and, when in the growing position, contacting the wicking interface area of the bottom surface of the corresponding seed pad (205) with an interface portion of the wick arranged in between both ends of the wick.

6. The growing device (100) according to any of the preceding claims 1-5, further comprising
a removable tray (105) for each seed pad (205) configured to be arranged in between a top surface of the seed pad support structure (102) and a bottom surface of the corresponding seed pad (205); and
wherein each tray (105) comprises a cutout for the corresponding wicking structure (103) and the corresponding protrusion (204).

7. The growing device (100) according to any of the preceding claims 1-6, further comprising a light source (104) arranged above the seed pads in the growing position for providing the growing plants with energy for photosynthesis, the light source (104) providing more than 210 mole and less than 250 mole of photosynthetic active radiation per day.

8. A seed pad (205) for a growing device (100) for growing plants from seeds according to any of claims 1-7, comprising:
a seed pad base comprising a wicking material, wherein the seed pad base is configured to receive a plurality of plant seeds arranged in or on a top surface of the seed pad base, wherein the seed pad base has at least one perforation (206) having a predetermined shape and orientation configured to interact with a correspondingly shaped protrusion (204) of the growing device (100), thereby defining a predetermined growing position for the seed pad (205) when the seed pad (205) is inserted into the growing device (100); and
a wicking interface area on the bottom surface of the seed pad base configured to contact a corresponding wicking structure (103) of the growing device (100), when the seed pad (205) is in the growing position, to establish capillary water transport from the growing device (100) to the seed pad (205),
wherein the wicking material transports water from the wicking interface area to the plant seeds via capillary action.

9. The seed pad (205) according to claim 8, comprising a rectangular or quadratic footprint and / or rounded corners.

10. The seed pad (205) according to claim 9, wherein the length of the seed pad (205) is larger than 115 mm and smaller than 121 mm, preferably 118 mm, and wherein the width of the seed pad (205) is larger than 75 mm and smaller than 81 mm, preferably 76 mm, and wherein the seed pad (205) comprises an elongated wicking interface area along the center line in each half of the seed pad (205).

11. The seed pad (205) according to any of the preceding claims 8 - 10, wherein the seed pad (205) comprises a single perforation (206) in the center of the seed pad (205), that is not rotationally symmetric and / or has an area larger than 300 mm² and smaller than 400 mm².

12. The seed pad (205) according to any of the preceding claims 8 - 11, wherein the perforation (206) in the seed pad (205) interacts with the corresponding protrusion (204) of the growing device (100) to determine a predetermined contact pressure between the wicking interface area of the seed pad (205) and the wicking structure (103) of the growing device (100).

13. The seed pad (205) of any of the preceding claims 8 - 12, further comprising a machine-readable label providing illumination parameters for a light source (104) of the growing device (100).

14. The seed pad (205) of any of the preceding claims 8 - 13, further comprising:
a biodegradable, hydroponic substrate;
an essentially regular arrangement of seeds having an area density of 45.000 or more seed per square meter and less than 55.000 seeds per square meter; and / or
a cellulose layer.

15. A growing system for growing plants from seeds, comprising:
a growing device (100) according to any one of the claims 1-7; and
one or more seed pads (205) according to any one of claims 8 - 14.

## Patentansprüche

1. Anbauvorrichtung (100) zum Anbauen von Pflanzen aus Samen, umfassend:
einen Wasserbehälter (101);
eine Saatpadträgerstruktur (102) zum Aufnehmen eines oder mehrerer Saatpads (205) in einer vorbestimmten Anbauposition über dem Wasserbehälter (101); und
eine Dochtstruktur (103) für jedes Saatpad (205), die so konfiguriert ist, dass sie, wenn sich das entsprechende Saatpad (205) in der Anbauposition befindet, die Unterseite des Saatpads (205) in einem vorbestimmten Dochtverbindungsbereich berührt und so konfiguriert ist, dass sie Wasser aus dem Wasserbehälter (101) durch Kapillarwirkung durch den Dochtverbindungsbereich in das Saatpad (205) transportiert; und
wobei die Saatpadträgerstruktur (102) einen Vorsprung (204) für jedes Saatpad (205) umfasst, wobei der Vorsprung (204) eine vorbestimmte Form und Ausrichtung aufweist, dadruch gekennzeichnet, dass die Saatpadträgerstruktur konfiguriert ist, um mit einer entsprechend geformten Perforation (206) im entsprechenden Saatpad zusammenzuwirken, so dass sich der Vorsprung (204) durch die Perforation (206) im entsprechenden Saatpad (205) erstreckt und dadurch die vorbestimmte Anbauposition für das entsprechende Saatpad (205) definiert.

2. Anbauvorrichtung (100) nach Anspruch 1, wobei die vorbestimmte Form des Vorsprungs (204) nicht rotationssymmetrisch ist und die Fläche des Querschnitts des Vorsprungs (204) in einer Richtung abnimmt, die von der Oberseite der Saatpadträgerstruktur (102) weg zeigt.

3. Anbauvorrichtung (100) nach Anspruch 1 oder 2, wobei der Vorsprung (204) eine obere Öffnung umfasst, wodurch eine Entlüftung vom Raum unter dem Saatpad (205) zum Raum über dem Saatpad (205) gebildet wird.

4. Anbauvorrichtung (100) nach Anspruch 3, wobei sich ein Abschnitt der Dochtstruktur (103) für jedes Saatpad (205) unterhalb oder durch die entsprechende Entlüftung erstreckt, die durch den entsprechenden Vorsprung (204) gebildet wird, so dass ein Luftstrom durch die Entlüftung die Verdunstungsrate des Abschnitts der Dochtstruktur (103) erhöht.

5. Anbauvorrichtung (100) nach einem der vorhergehenden Ansprüche 1-4,
wobei jede Dochtstruktur (103) einen Docht umfasst, der mit beiden Enden in den Wasserbehälter (101) eintaucht; und, wenn sich das Saadpad in der Anbauposition befindet, der Docht den Dochtverbindungsbereich der Unterseite des entsprechenden Saatpads (205) mit einem Verbindungsabschnitt des Dochts berührt, der zwischen beiden Enden des Dochts angeordnet ist.

6. Anbauvorrichtung (100) nach einem der vorhergehenden Ansprüche 1-5, ferner umfassend
eine entfernbare Schale (105) für jedes Saatpad (205), die konfiguriert ist, um zwischen einer Oberseite der Saatpadträgerstruktur (102) und einer Unterseite des entsprechenden Saatpads (205) angeordnet zu sein; und
wobei jede Schale (105) einen Ausschnitt für die entsprechende Dochtstruktur (103) und den entsprechenden Vorsprung (204) umfasst.

7. Anbauvorrichtung (100) nach einem der vorhergehenden Ansprüche 1-6, ferner umfassend eine Lichtquelle (104), die über den Saatpads in der Anbauposition angeordnet ist, um den angbauten pflanzen Energie für Photosynthese bereitzustellen, wobei die Lichtquelle (104) mehr als 210 Mol und weniger als 250 Mol photosynthetisch aktive Strahlung pro Tag bereitstellt.

8. Saatpad (205) für eine Anbauvorrichtung (100) zum Anbauen von Pflanzen aus Samen gemäß eines der Ansprüche 1 - 7,
umfassend:
eine Saatpadbasis, umfassend ein Dochtmaterial, wobei die Saatpadbasis konfiguriert ist, um mehrere Pflanzensamen aufzunehmen, die in oder auf einer Oberseite der Saatpadbasis angeordnet sind, wobei die Saatpadbasis mindestens eine Perforation (206) mit einer vorbestimmten Form und Ausrichtung aufweist, die konfiguriert ist, um mit einem entsprechend geformten Vorsprung (204) der Anbauvorrichtung (100) zusammenzuwirken, wodurch eine vorbestimmte Anbauposition für das Saatpad (205) definiert wird, wenn das Saatpad (205) in die Anbauvorrichtung (100) eingesetzt wird; und
einen Dochtverbindungsbereich auf der Unterseite der Saatpadbasis, der konfiguriert ist, um eine entsprechende Dochtstruktur (103) der Anbauvorrichtung (100) zu berühren, wenn sich das Saatpad (205) in der Anbauposition befindet, um einen Kapillarwassertransport von der Anbauvorrichtung (100) zum Saatpad (205) herzustellen,
wobei das Dochtmaterial Wasser aus dem Dochtverbindungsbereich durch Kapillarwirkung zu den Pflanzensamen transportiert.

9. Saatpad (205) nach Anspruch 8, umfassend eine rechteckige oder quadratische Grundfläche und/oder abgerundete Ecken.

10. Saatpad (205) nach Anspruch 9, wobei die Länge des Saatpads (205) größer als 115 mm und kleiner als 121 mm, vorzugsweise 118 mm ist, und wobei die Breite des Saatpads (205) größer als 75 mm und kleiner als 81 mm, vorzugsweise 76 mm ist, und wobei das Saatpad (205) einen länglichen Dochtverbindungsbereich entlang der Mittellinie in jeder Hälfte des Saatpads (205) umfasst.

11. Saatpad (205) nach einem der vorhergehenden Ansprüche 8-10, wobei das Saatpad (205) eine einzelne Perforation (206) in der Mitte des Saatpads (205) umfasst, die nicht rotationssymmetrisch ist und/oder eine Fläche größer als 300 mm2 und kleiner als 400 mm2 aufweist.

12. Saatpad (205) nach einem der vorhergehenden Ansprüche 8-11, wobei die Perforation (206) im Saatpad (205) mit dem entsprechenden Vorsprung (204) der Anbauvorrichtung (100) interagiert, um einen vorbestimmten Kontaktdruck zwischen dem Dochtverbindungsbereich des Saatpads (205) und der Dochtstruktur (103) der Anbauvorrichtung (100) zu bestimmen.

13. Saatpad (205) nach einem der vorhergehenden Ansprüche 8-12, ferner umfassend ein maschinenlesbares Etikett, das Beleuchtungsparameter für eine Lichtquelle (104) der Anbauvorrichtung (100) bereitstellt.

14. Saatpad (205) nach einem der vorhergehenden Ansprüche 8-13, ferner umfassend:
ein biologisch abbaubares, hydroponisches Substrat;
eine im Wesentlichen regelmäßige Anordnung von Samen mit einer Flächendichte von 45.000 oder mehr Samen pro Quadratmeter und weniger als 55.000 Samen pro Quadratmeter; und/oder
eine Celluloseschicht.

15. Anbausystem zum Anbauen von Pflanzen aus Samen, umfassend:
eine Anbauvorrichtung (100) nach einem der Ansprüche 1-7; und
ein oder mehrere Saatpads (205) nach einem der Ansprüche 8-14.

## Revendications

1. Un dispositif de culture (100) pour faire pousser des plantes à partir de semences, comprenant :
un récipient à eau (101) ;
une structure support de coussins à semences (102) destinée à recevoir un ou plusieurs coussins à semences (205) dans une position de culture prédéterminée au-dessus du conteneur à eau (101) ; et
une structure d'humidification (103) pour chaque coussin à semences (205) configurée pour venir en contact, lorsque le coussin à semences correspondant (205) est dans la position de culture, avec la surface de dessous du coussin à semences (205) sur une zone d'interface d'humidification prédéterminée, et configurée pour transporter par action capillaire de l'eau du conteneur à eau (101) jusque dans le coussin à semences (205) via la zone d'interface d'humidification ; et
dans lequel la structure support de coussins à semences (102) comprend un relief (204) pour chaque coussin à semences (205), le relief (204) ayant une forme et une orientation prédéterminées,
**caractérisé en ce que** la structure support de coussins à semences est configurée pour interagir avec une perforation conformée de façon correspondante (206) dans le coussin à semences correspondant (205), de telle sorte que le relief (24) s'étende dans le coussin à semences correspondant (205) au travers de la perforation (206) en définissant ainsi la position de culture prédéterminée pour le coussin à semences correspondant (205).

2. Le dispositif de culture (100) de la revendication 1, dans lequel la forme prédéterminée du relief (204) n'est pas symétrique en rotation, et la surface de la section droite du relief (204) diminue dans une direction allant en éloignement de la surface supérieure de la structure support de coussins à semences (102).

3. Le dispositif de culture (100) de la revendication 1 ou 2, dans lequel le relief (204) comprend une ouverture de dessus formant ainsi un évent depuis le volume situé au-dessous du coussin à semences (205) jusqu'au volume situé au-dessus du coussin à semences (205) .

4. Le dispositif de culture (100) de la revendication 3, dans lequel une partie de la structure d'humidification (103) pour chaque coussin à semences (205) s'étend au-dessous ou au travers de l'évent correspondant formé par le relief correspondant (204), de telle sorte qu'un flux d'air passant par l'évent augmente la vitesse d'évaporation de la partie de la structure d'humidification (103).

5. Le dispositif de culture (100) de l'une des revendications 1 à 4 précédentes,
dans lequel chaque structure d'humidification (103) comprend une mèche trempant dans le conteneur à eau (101) par ses deux extrémités ; et qui, lorsqu'elle est dans la position de culture, met en contact la zone d'interface d'humidification de la surface de dessous du coussin à semences correspondant (205) avec une partie d'interface de la mèche qui est située entre les deux extrémités de la mèche.

6. Le dispositif de culture (100) selon l'une des revendications 1 à 5 précédentes, comprenant en outre
pour chaque coussin à semences (205), un plateau amovible (105) configuré pour être placé dans l'intervalle entre une surface supérieure de la structure support de coussins à semences (102) et une surface de dessous du coussin à semences correspondant (205) ; et
dans lequel chaque plateau (105) comprend une encoche pour la structure d'humidification correspondante (103) et le relief correspondant (204).

7. Le dispositif de culture (100) selon l'une des revendications 1 à 6 précédentes, comprenant en outre une source lumineuse (104) disposée au-dessus des coussins à semences dans la position de culture pour délivrer aux plantes qui poussent de l'énergie permettant la photosynthèse, la source lumineuse (104) délivrant plus de 210 moles et moins de 250 moles de rayonnement actif photosynthétique par jour.

8. Un coussin à semences (205) pour un dispositif de culture (100) pour faire pousser des plantes à partir de semences selon l'une des revendications 1 à 7, comprenant :
une base de coussin à semences comprenant un matériau d'humidification, la base de coussin à semences étant configurée pour recevoir une pluralité de semences de plantes disposées à l'intérieur ou sur une surface supérieure de la base de coussin, la base de coussin à semences possédant au moins une perforation (206) avec une forme et une orientation prédéterminées configurée pour interagir avec un relief conformé de façon correspondante (204) du dispositif de culture (100), définissant ainsi une position de culture prédéterminée pour le coussin à semences (205) lorsque le coussin à semences (205) est inséré dans le dispositif de culture ; et
une zone d'interface d'humidification sur la surface de dessous de la base de coussin à semences configurée pour venir en contact avec une structure d'humidification correspondante (103) du dispositif de culture (100), lorsque le coussin à semences (205) est dans la position de culture, pour établir un transfert capillaire d'eau du dispositif de culture (100) au coussin à semences (205), dans lequel le matériau d'humidification transporte l'eau de la zone d'interface d'humidification aux semences de plantes par l'intermédiaire d'une action capillaire.

9. Le coussin à semences (205) selon la revendication 8, présentant une emprise rectangulaire ou carrée et/ou des coins arrondis.

10. Le coussin à semences (205) selon la revendication 9, dans lequel la longueur du coussin à semences (205) est supérieure à 115 mm et inférieure à 121 mm, de préférence 118 mm, et dans lequel la largeur du coussin à semences (205) est supérieure à 75 mm et inférieure à 81 mm, de préférence 76 mm, et dans lequel le coussin à semences (205) comprend dans chaque moitié du coussin à semences (205) une zone allongée d'interface d'humidification le long de la ligne centrale.

11. Le coussin à semences (205) selon l'une des revendications 8 à 10 précédentes, dans lequel le coussin à semences (205) comprend au centre du coussin à semences (205) une perforation unique (206), qui n'est pas symétrique en rotation et/ou qui présente une surface supérieure à 300 mm² et inférieure à 400 mm².

12. Le coussin à semences (205) selon l'une des revendications 8 à 11 précédentes, dans lequel la perforation (206) dans le coussin à semences (205) interagit avec le relief correspondant (204) du dispositif de culture (100) pour déterminer une pression de contact prédéterminée entre la zone d'interface d'humidification du coussin à semences (205) et la structure d'humidification (103) du dispositif de culture (100) .

13. Le coussin à semences (205) de l'une des revendications 8 à 12 précédentes, comprenant en outre une étiquette lisible par machine indiquant des paramètres d'illumination pour une source lumineuse (104) du dispositif de culture (100).

14. Le coussin à semences (205) de l'une des revendications 8 à 13 précédentes, comprenant en outre :
un substrat hydroponique biodégradable ;
une configuration globalement régulière de semences ayant une densité de surface de 45 000 ou plus semences par mètre carré et inférieure à 55 000 semences par mètre carré ; et/ou
une couche de cellulose.

15. Un système de culture pour faire pousser des plantes à partir de semences, comprenant :
un dispositif de culture (100) selon l'une des revendications 1 à 7 ; et
un ou plusieurs coussins à semences (205) selon l'une des revendications 8 à 14.
